# FASCICULE DE BREVET EUROPEEN

(11) **EP 3 721 095 B1**
(45) Date de publication et mention de la délivrance du brevet: **05.02.2025**
(21) Numéro de dépôt: 18830286.3
(22) Date de dépôt: 04.12.2018
(51) Int. Cl.: F15D 1/00, F03D 80/00, F03D 13/20, E04H 12/00, F03D 3/00

(54) **REVÊTEMENT PROPRE À DIMINUER LA TRAÎNÉE DE L'ÉCOULEMENT D'UN FLUIDE AUTOUR D'UN ÉLÉMENT CYLINDRIQUE**
BELAG ZUR REDUZIERUNG DES STRÖMUNGSWIDERSTANDS UM EIN ZYLINDRISCHES ELEMENT HERUM
LINER FOR REDUCING DRAG OF A FLUID FLOW AROUND A CYLINDRICAL ELEMENT

(30) Priorité: 05.12.2017 FR 1761656
(43) Date de publication de la demande: 14.10.2020
(73) Titulaire: Wind-it, 78280 Guyancourt (FR)
(72) Inventeur: VERREZ, Frédéric, 31250 Revel (FR); MASSOUH, Fawaz, 94360 Bru Sur Marne (FR); DOBREV, Ivan Kolev, 75013 Paris (FR)
(74) Mandataire: Ipside
(86) Numéro de dépôt international: PCT/FR2018/053101
(87) Numéro de publication internationale: WO 2019/110916

(56) Documents cités:
- WO-A1-2004/038217
- CN-U- 205 400 999
- KR-A- 20110 045 711
- US-A- 4 907 765
- US-A1- 2013 125 992
- US-A1- 2015 361 958

## Description

### Domaine de l'invention

L'invention relève des dispositifs permettant de réguler l'écoulement d'un fluide autour d'un corps. Elle s'inscrit dans le domaine des revêtements de surface, et concerne plus particulièrement un revêtement propre à diminuer la traînée de l'écoulement d'un fluide autour d'un élément cylindrique, pour une plage de vitesses du fluide prédéfinie.

### État de l'art

Lorsqu'un solide est soumis à l'écoulement d'un fluide, en fonction de la forme dudit solide et en fonction de certaines caractéristiques du fluide, un sillage peut être généré. Le sillage caractérise une zone d'écoulement perturbé d'un fluide, en aval du solide par rapport auquel ledit fluide est en mouvement relatif. Dans le présent texte, les termes « amont » et « aval » sont employés en considérant le sens de l'écoulement du fluide. Le sillage est généré en aval du solide par un décollement de la couche limite formée autour dudit solide.

Le sillage peut présenter certains effets pouvant être dommageables d'une part au solide, en participant à l'excitation en vibration dudit solide, et d'autre part, au fonctionnement optimal d'un système intégrant ledit solide, par la génération d'une zone d'écoulement perturbé.

Notamment, on connaît les effets du sillage sur les éoliennes comprenant un mât portant des pales agencées en rotation autour d'un axe horizontal et disposées en aval dudit mât. Ces éoliennes présentent un rendement réduit du fait de la présence d'une zone de sillage en aval du mât. En effet, lorsqu'elles se déplacent dans cette zone de sillage, les pales sont impactées par un vent dont l'écoulement est turbulent, sa force de poussée sur la pale est donc amoindrie.

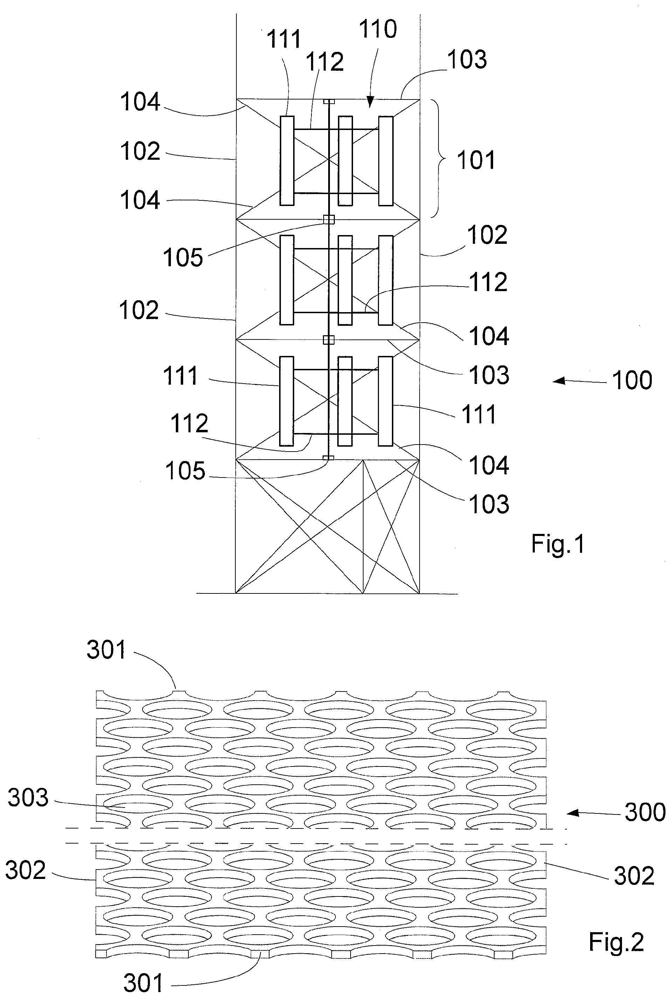

Le sillage présente également un impact négatif dans le fonctionnement d'éoliennes intégrées à des pylônes 100, tel que représenté par la figure 1.

Ces pylônes 100 sont rigidement fixés au sol et sont généralement formés par une structure métallique en treillis comprenant plusieurs modules 101 superposés les uns aux autres, tel qu'illustré schématiquement par la figure 1. Chaque module 101 comprend des montants 102 reliés deux à deux par des traverses 103 et des diagonales 104. Les diagonales 104 relient les traverses 103 de deux modules 101 adjacents, comme le montre la figure 1. Il est à noter que seulement deux montants 102 sont représentés sur la figure 1, de sorte à ne pas encombrer la lecture de ladite figure, mais les modules 101 comprennent généralement trois montants 102.

Avantageusement, les moyens de génération d'énergie électrique sont formés par au moins une éolienne 110 à axe de rotation vertical, par exemple de type Darrieus, fixée dans la structure du pylône 100.

Plus particulièrement, au moins un module 101 comprend une structure support 105 destinée à maintenir une éolienne 110, par exemple à équidistance de chaque montant 102, comme le représente la figure 1.

La ou chaque éolienne 110 comprend généralement des pales 111 s'étendant longitudinalement selon des axes sensiblement verticaux, c'est-à-dire sensiblement parallèles à la direction de la pesanteur. Ces pales 111 sont fixées par des bras 112 à un arbre mécaniquement lié au rotor d'un générateur et monté en rotation dans la structure support 105. Les pales 111 sont destinées à entraîner le rotor en rotation lorsqu'elles sont soumises à une force de poussée exercée par le vent, de sorte que le générateur produise de l'énergie électrique.

Les montants 102 du pylône 100 peuvent, selon la direction et le sens d'écoulement du vent, générer un sillage enveloppant une ou des pales 111 de l'éolienne 110. Ce sillage perturbe l'écoulement de l'air sur la ou les pales 111 qu'il enveloppe et ainsi perturbe l'entraînement en rotation de l'éolienne.

Dans le pire des cas, ce phénomène de sillage empêche la rotation des pales 111 d'éolienne 110, et dans le meilleur des cas, il affecte seulement le rendement de l'éolienne 110.

Un revêtement destiné à recouvrir un élément cylindrique selon le préambule de la revendication 1 est connu de WO2004/038217 A1.

### Exposé de l'invention

La présente invention a pour objectif de palier les inconvénients précités en visant à réduire la résistance aérodynamique d'un élément cylindrique, c'est-à-dire en visant à réduire sa traînée sur une plage de vitesses du fluide prédéterminées, lorsqu'il est soumis à l'écoulement du fluide, de sorte à réduire le sillage qu'il génère.

A cet effet, l'invention concerne un revêtement selon la revendication 1.

Par « couche mince », on entend que le revêtement présente une épaisseur comprise entre un millimètre et une à quelques dizaines de millimètres. Ainsi, le revêtement est de la forme d'une peau souple, d'un seul tenant, destinée à être appliquée contre un élément cylindrique.

Il en découle que le sillage généré en aval de l'élément cylindrique est considérablement réduit. A titre d'exemple, la largeur du sillage d'un élément cylindrique soumis à l'écoulement d'un fluide peut être divisée par quatre lorsqu'il est recouvert par le revêtement selon l'invention.

Le coefficient de traînée d'un élément cylindrique recouvert par le revêtement peut être réduit de 25% pour une plage de vitesses de fluide prédéterminées, par rapport au coefficient de traînée d'un élément cylindrique de même forme générale et de même dimensions mais non recouvert par le revêtement selon l'invention.

Le sillage d'un élément cylindrique est donc contrôlé de manière passive pour une plage de vitesses de fluide prédéterminées par le revêtement selon l'invention.

Dans le présent texte, lorsque l'on dit que le revêtement est destiné à recouvrir un élément cylindrique, on entend qu'il est destiné à envelopper l'élément cylindrique.

Le revêtement étant souple, il est facilement applicable contre tout élément cylindrique dont la section droite présente une forme quelconque, même complexe, tel qu'une forme présentant des angles vifs.

En outre, un même revêtement peut être appliqué successivement contre différents éléments cylindriques de section droite de forme différente.

Cette caractéristique participe également à la réduction du coût de fabrication du revêtement.

Des modes particuliers de réalisation de l'invention sont décrits dans les revendications dépendantes.

### Présentation des figures

L'invention sera mieux comprise à la lecture de la description suivante, donnée à titre d'exemple nullement limitatif, et faite en se référant aux figures qui représentent :
- Figure 1 : une vue schématique d'un pylône selon l'état de l'art, à l'intérieur duquel sont installées des éoliennes à axe de rotation vertical,
- Figure 2 : une vue en perspective d'un revêtement selon l'invention,
- Figure 3 : une vue schématique d'un pylône selon l'invention, et une vue schématique de détail en perspective d'une portion d'un montant recouvert d'un revêtement selon la figure 2,
- Figure 4 : une photographie d'un montant d'un pylône selon la figure 3, recouvert d'un revêtement selon la figure 2.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description détaillée de l'invention

Comme le montre la figure 2, la présente invention est relative à un revêtement 300 présentant la forme d'une couche mince, configuré pour recouvrir un élément cylindrique en mouvement relatif par rapport à un fluide. La présente invention a pour effet de réduire la résistance aérodynamique dudit élément cylindrique, c'est-à-dire de réduire sa traînée sur une plage de vitesses du fluide prédéterminées, de sorte à réduire le sillage qu'il génère.

Préférentiellement, le revêtement 300 est destiné à recouvrir un élément cylindrique fixe soumis à l'écoulement d'un fluide, par exemple l'écoulement du vent.

L'expression « cylindrique » utilisée dans le présent texte est à prendre au sens général englobant toute forme de section du cylindre, telle que par exemple une section oblongue, elliptique, circulaire ou polygonale. L'élément cylindrique, peut être formé par tout profilé, creux ou plein.

La figure 2 montre que le revêtement 300 s'étend d'une part, entre deux premiers flancs 301 parallèles destinés à être agencés sensiblement en vis-à-vis l'un de l'autre lorsque ledit revêtement 300 recouvre l'élément cylindrique, et d'autre part, entre deux seconds flancs 302 parallèles, destinés à être agencés à l'opposé l'un de l'autre lorsque ledit revêtement 300 recouvre l'élément cylindrique.

Le revêtement 300 s'étend, par exemple, sur une longueur de l'ordre d'une à plusieurs dizaines de mètres entre ses deux seconds flancs 302. Le revêtement 300 s'étend, par exemple, sur une largeur dont la valeur est sensiblement identique à la valeur du périmètre de l'élément cylindrique qu'il est destiné à recouvrir. La largeur est ici définie par la distance entre les deux premiers flancs 301.

Le revêtement 300 présente une épaisseur d'environ un à plusieurs dizaines de millimètres, préférentiellement de deux millimètres. L'épaisseur du revêtement 300 peut être choisie en fonction de sa largeur, par exemple pour des raisons de tenue mécanique ou de rigidité.

Le revêtement 300 comprend des suites de reliefs répartis sur sa surface. Plus particulièrement, le revêtement comprend plusieurs rangées de reliefs, parallèles les unes aux autres.

Cette caractéristique permet de n'avoir qu'un unique revêtement à manipuler en vu de recouvrir un élément cylindrique.

Les reliefs sont formés par des alvéoles. Le terme « alvéole » définit une cavité dans le présent texte. L-ee

Selon l'invention représentée sur les figures 2, 3 et 4, les reliefs sont formés par des alvéoles 303 de forme cylindrique à section circulaire.

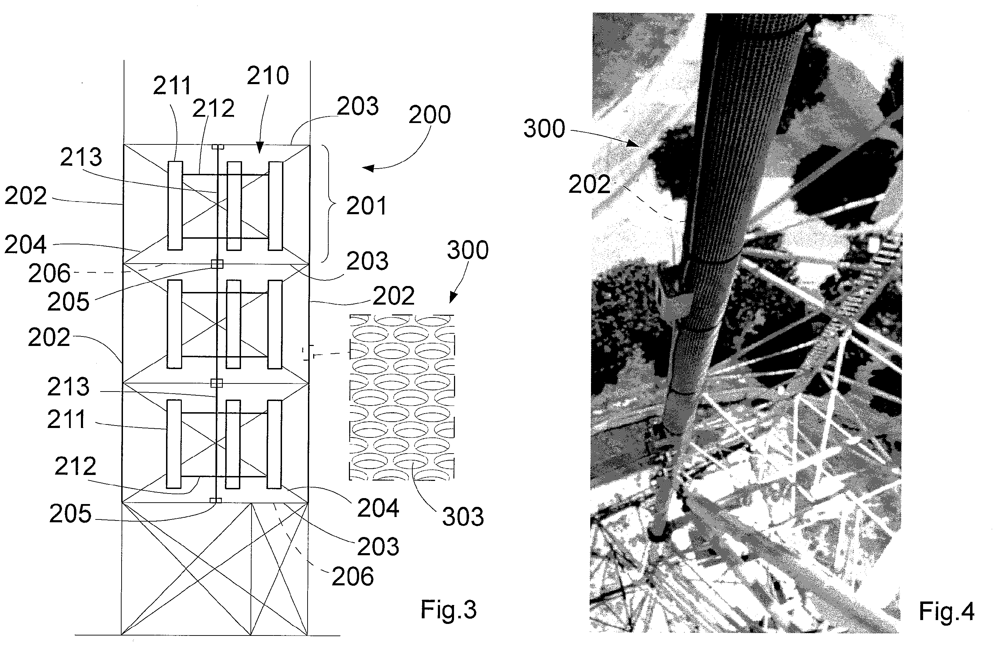

Ces alvéoles 303 sont traversants, telles que l'illustrent la figure 2 et la vue de détail de la figure 3.

Les dimensions des alvéoles 303, ainsi que la distance entre deux alvéoles 303 adjacents, sont choisies en fonction de la plage de vitesses du fluide dans laquelle on souhaite réduire les effets aérodynamiques de l'élément cylindrique, c'est-à-dire une plage de vitesses de fluide dans laquelle on souhaite réduire le sillage et/ou les phénomènes vibratoires de l'élément cylindrique.

Préférentiellement, les dimensions des alvéoles 303 sont inversement proportionnelles à la plage de vitesses du fluide prédéterminées. En d'autres termes, plus la plage est définie selon des vitesses importantes, plus les dimensions des alvéoles 303 sont réduites et inversement.

Par exemple, dans le mode de réalisation représenté par les figures, cette plage de vitesses prédéterminées est définie entre quatre et huit mètres par seconde et les alvéoles 303 peuvent présenter un diamètre de six millimètres et être distantes les unes des autres par des ponts de matière d'environ un millimètre.

Les dimensions des alvéoles 303 sont préférentiellement également choisies en fonction de la forme de l'élément cylindrique et des dimensions de sa périphérie.

Comme représenté sur les figures 2 et 3, les alvéoles 303 sont agencés en quinconce.

Selon l'invention, le revêtement 300 présente plusieurs séries d'alvéoles 303, formées par plusieurs suites d'alvéoles, lesdites séries étant adjacentes les unes aux autres et présentant des densités d'alvéoles différentes les unes des autres, c'est-à-dire comprenant un nombre d'alvéole différent sur une même dimension de surface. Ces séries d'alvéoles de différentes densités n'ont pas été représentées sur les figures 2, 3 et 4.

Préférentiellement, le revêtement 300 est configuré de sorte que ces séries sont réparties radialement sur le revêtement 300 lorsque ledit revêtement 300 recouvre l'élément cylindrique, de sorte que l'effet produit sur son sillage soit différent en fonction de la direction du vent.

Dans un autre exemple de réalisation de l'invention, le revêtement 300 peut également être configuré de sorte que les séries d'alvéoles 303 soient réparties longitudinalement sur le revêtement 300 lorsque ledit revêtement 300 recouvre l'élément cylindrique. Cette caractéristique permet de moduler l'effet produit par le revêtement 300 en fonction de la distance par rapport au sol à laquelle est agencée chaque série.

Avantageusement, le revêtement 300 favorise l'apparition d'une couche limite turbulente autour de l'élément cylindrique, lorsqu'il est soumis à la circulation d'un fluide sur une plage de vitesses prédéterminées, quel que soit la direction et le sens d'écoulement du fluide. Il en découle que le coefficient de traînée dudit élément cylindrique peut être réduit de l'ordre de 25% sur cette plage de vitesses du fluide, ce qui permet de réduire considérablement le sillage généré en aval des éléments cylindrique.

Le revêtement 300 présente préférentiellement une forme générale sensiblement plane lorsqu'il ne recouvre pas d'élément cylindrique. Il est avantageusement réalisé à partir d'un matériau souple, par exemple du polyuréthane, et peut être obtenu par un procédé de fabrication par moulage à plat.

Ainsi, le revêtement 300 peut être stocké facilement, par exemple sous forme de rouleau.

Dans des modes particuliers de réalisation de l'invention, les deux premiers flancs 301 comprennent respectivement des attaches rapides complémentaires adaptées à fixer rigidement le revêtement 300 sur l'élément cylindrique. Ces attaches rapides peuvent être formées par des organes d'emboitement élastique adaptés à réaliser un assemblage du type mâle-femelle.

Alternativement ou additionnellement, les deux premiers flancs 301 peuvent être fixés à l'élément cylindrique par application d'une couche de matériau adhésif agencée le long des deux premiers flancs 301 à l'interface entre le revêtement 300 et ledit élément cylindrique.

Le revêtement 300 présente donc l'avantage d'être simple à installer sur les éléments cylindriques déjà existants.

Le revêtement 300 selon la présente invention est particulièrement avantageux dans son application sur un pylône de pont suspendu, un mât d'éolienne à axe verticale dont les pales sont agencées en aval dudit mât, ou plus généralement toute structure soumise à l'écoulement d'un fluide susceptible de générer une zone de sillage ou des phénomènes vibratoires non désirés.

L'exemple exposé ci-après et représenté par les figures 3 et 4 décrit l'application du revêtement 300 selon l'invention notamment sur des montants, traverses et/ou diagonales d'un pylône 200, par exemple un pylône de télécommunication ou un pylône électrique. On comprend donc que l'élément cylindrique est défini ci-après par tout montant, traverse et/ou diagonale.

Le pylône 200 est par exemple un pylône du même type que ceux de l'art antérieur décrit ci-avant. Le pylône 200 peut comprendre plusieurs modules 201 superposés les uns aux autres et comprenant chacun au moins trois montants 202, par exemple répartis à équidistance les uns des autres. Les montants 202 sont reliés deux à deux par des traverses, dites « traverses périphériques » 203 et des diagonales 204. Les montants 202 d'un module 201 sont fixés aux montants 202 du ou des modules 201 adjacents, par exemple, par emmanchement.

Les montants 202, traverses périphériques 203 et diagonales 204 peuvent être formées par des profilés tubulaires de section droite circulaire.

Les traverses périphériques 203 s'étendent préférentiellement selon des axes longitudinaux sensiblement perpendiculaires aux montants 202 et chaque diagonale 204 s'étend préférentiellement entre deux traverses périphériques 203 selon un axe longitudinal incliné par rapport aux axes longitudinaux desdites traverses périphériques 203, comme le montre la figure 3. Il est à noter que seulement deux montants 202 sont représentés sur la figure 3 de sorte à ne pas encombrer ladite figure.

Chaque module 201 comprend au moins une structure support 205. Dans le mode de réalisation décrit ci-après, chaque module 201 comprend deux structures supports 205 fixées à distance l'une de l'autre, dans un volume défini entre les montants 202, en ce sens que le volume est délimité par lesdits montants 202. Les structures support 205 sont préférentiellement fixées à équidistance de chaque montant 202, par des traverses dites « traverses intérieures » 206 agencées radialement par rapport à un axe longitudinal médian du pylône. Plus particulièrement, chacune desdites traverses intérieures 206 d'un module 201 est fixée par une de ses extrémités à un montant 202 et par l'autre à une des structures support 205.

Les structures support 205 d'un module 201 sont configurées pour recevoir des organes de guidage en rotation d'une éolienne 210 à axe de rotation vertical, de sorte que l'éolienne 210 soit agencée dans un volume défini entre les montants 202, comme représenté par la figure 3.

Ces éoliennes 210, par exemple de type Darrieus, comprennent des pales 211 s'étendant longitudinalement selon des axes sensiblement verticaux. Ces pales 211 sont fixées par des bras 212 à un arbre 213 rotatif mécaniquement lié aux organes de guidage en rotation et solidaire du rotor d'un générateur (non représenté sur les figures).

Les montants 202 sont recouverts par un revêtement 300, au moins sur une portion dont la longueur s'étend au droit des pales 211, et préférentiellement sur l'ensemble de leur longueur, comme le montre la figure 3.

Autrement dit, le revêtement 300 recouvre l'ensemble de la périphérie des montants 202, sur une longueur au moins identique à la longueur de la projection orthogonale d'une pale sur lesdits montants.

Dans ce mode de réalisation, les dimensions et formes des alvéoles 303 du revêtement 300, ainsi que la distance entre deux alvéoles 303 adjacents, peuvent être choisies en fonction d'une plage de vitesses du vent prédéterminées dans laquelle l'éolienne 210 est destinée à être opérationnelle. Plus particulièrement, cette plage de vitesses est prédéterminée en fonction de l'intervalle des vitesses du vent dans lequel on souhaite réduire la largeur du sillage généré par les montants 202 du pylône 200.

La figure 4 représente un exemple de fixation du revêtement 300, dans lequel le revêtement 300 est maintenu en position contre le montant par l'utilisation de colliers de serrage.

De manière plus générale, il est à noter que les modes de mise en œuvre et de réalisation de l'invention considérés ci-dessus ont été décrits à titre d'exemples non limitatifs et que d'autres variantes sont par conséquent envisageables.

Bien que les modules et éoliennes sont décrits et illustrés sur la figure 3 au nombre de trois, leur nombre n'est pas limité à celui décrit et illustré. Ainsi, il est possible, sans se départir du cadre de l'invention, de réaliser un pylône comprenant un, deux, quatre modules et éoliennes ou plus, le nombre d'éoliennes étant au moins égal au nombre de modules.

## Revendications

1. Revêtement (300) sous la forme d'une couche mince souple destiné à recouvrir un élément cylindrique (202, 203, 204, 205, 206) soumis à l'écoulement d'un fluide et s'étendant d'une part entre deux premiers flancs (301) sensiblement parallèles destinés à être agencés en vis-à-vis l'un de l'autre lorsque ledit revêtement (300) recouvre l'élément cylindrique et d'autre part entre deux seconds flancs (302) sensiblement parallèles, destinés à être agencés à l'opposé l'un de l'autre lorsque ledit revêtement (300) recouvre l'élément cylindrique (20), le revêtement comprenant, rassemblées sur un unique élément, plusieurs rangées parallèles les unes aux autres d'alvéoles (303), lesdits alvéoles (303) d'une rangée étant agencés en quinconce par rapport aux alvéoles (303) de chaque rangée adjacente, lesdites rangées étant configurées pour favoriser l'apparition d'une couche limite turbulente à l'interface entre ledit revêtement (300) et le fluide, lorsque le fluide présente une vitesse comprise dans une plage de valeurs prédéterminées, **caractérisé en ce que** lesdits alvéoles (303) sont traversants de forme générale cylindrique à section circulaire, les rangées d'alvéoles (303) formant en outre plusieurs séries, chaque série étant formée de plusieurs suites d'alvéoles (303), lesdites séries étant adjacentes et comprenant les unes par rapport aux autres des densité d'alvéoles (303) différentes les unes des autres, c'est à dire comprenant un nombre d'alvéoles (303) différent sur une même dimension de surface.

2. Revêtement (300) selon la revendication 1, configuré de sorte que lorsqu'il recouvre un élément cylindrique (202, 203, 204, 205, 206), les séries de reliefs sont réparties radialement.

3. Revêtement (300) selon la revendication 1, configuré de sorte que lorsqu'il recouvre un élément cylindrique (202, 203, 204, 205, 206), les séries de reliefs sont réparties longitudinalement.

4. Revêtement (300) selon l'une des revendications 1 à 3, dans lequel les deux premiers flancs (301) comprennent respectivement des attaches rapides complémentaires telles que des colliers de serrage destinées à fixer rigidement le revêtement (300) sur l'élément cylindrique (20).

5. Revêtement (300) selon l'une des revendications 1 à 4, **caractérisé en ce qu'**il est obtenu par un procédé de fabrication par moulage à plat.

6. Element cylindrique (202, 203, 204, 205, 206) **caractérisé en ce qu'**il est recouvert par un revêtement (300) selon l'une des revendications 1 à 5.

7. Pylône (200) comprenant une pluralité de montants (202) reliés entre eux par des traverses dites « traverses périphériques » (203), ledit pylône étant **caractérisé en ce qu'**au moins un des montants est recouvert par un revêtement (300) selon l'une des revendications 1 à 5.

8. Pylône selon la revendication 7, comprenant au moins une structure support (205) portée par des traverses dites « traverses intérieures » (206) dans un volume défini entre les montants (202), ladite structure support comprenant des organes de guidage en rotation mécaniquement liés à un arbre (213) rotatif d'une éolienne (210) à axe de rotation vertical, ladite éolienne comprenant une pluralité de pales (211) s'étendant selon un axe longitudinal sensiblement vertical fixées autour dudit arbre, au moins un montant (202) étant recouvert d'un revêtement (300) sur au moins une portion de sa longueur située au droit des pales d'éolienne.

## Patentansprüche

1. Abdeckung (300) in Form einer dünnen, flexiblen Schicht, die dazu bestimmt ist, ein zylindrisches Element (202, 203, 204, 205, 206) abzudecken, das der Strömung eines Fluids ausgesetzt ist und sich einerseits zwischen zwei ersten, im Wesentlichen parallelen Seiten (301), die dazu bestimmt sind, einander gegenüber angeordnet zu sein, wenn die Abdeckung (300) das zylindrische Element abdeckt, und andererseits zwischen zwei zweiten, im Wesentlichen parallelen Seiten (302) erstreckt, die dazu bestimmt sind, voneinander entgegengesetzt angeordnet zu sein, wenn die Abdeckung (300) das zylindrische Element (20) abdeckt, wobei die Abdeckung mehrere zueinander parallele Reihen von Zellen (303) umfasst, die auf einem einzigen Element zusammengeführt sind, wobei die Zellen (303) einer Reihe im Verhältnis zu den Zellen (303) jeder benachbarten Reihe versetzt angeordnet sind, wobei die Reihen dazu konfiguriert sind, das Auftreten einer turbulenten Grenzschicht an der Grenzfläche zwischen der Abdeckung (300) und dem Fluid zu begünstigen, wenn das Fluid eine Geschwindigkeit innerhalb eines Bereichs vorbestimmter Werte aufweist,
**dadurch gekennzeichnet, dass** die Zellen (303) durchgehend mit einer zylindrischen Form mit kreisförmigem Querschnitt sind, wobei die Reihen von Zellen (303) ferner mehrere Sätze bilden, wobei jeder Satz aus mehreren Folgen von Zellen (303) gebildet ist, wobei die Sätze benachbart sind und im Verhältnis zueinander unterschiedliche Dichten der Zellen (303) umfasst, das heißt, sie umfassen eine Anzahl von Zellen (303), die auf derselben Flächenabmessung unterschiedlich sind.

2. Abdeckung (300) nach Anspruch 1, die derart konfiguriert ist, dass, wenn sie ein zylindrisches Element (202, 203, 204, 205, 206) abdeckt, die Sätze von Reliefs radial verteilt sind.

3. Abdeckung (300) nach Anspruch 1, die derart konfiguriert ist, dass, wenn sie ein zylindrisches Element (202, 203, 204, 205, 206) abdeckt, die Sätze von Reliefs in Längsrichtung verteilt sind.

4. Abdeckung (300) nach einem der Ansprüche 1 bis 3, wobei die ersten beiden Seiten (301) jeweils komplementäre Schnellverschlüsse umfassen, wie etwa Klemmschellen, die dazu bestimmt sind, die Abdeckung (300) starr am zylindrischen Element (20) zu befestigen.

5. Abdeckung (300) nach einem der Ansprüche 1 bis 4, **dadurch gekennzeichnet, dass** sie durch ein Flachformverfahren hergestellt ist.

6. Zylindrisches Element (202, 203, 204, 205, 206), **dadurch gekennzeichnet, dass** es mit einer Abdeckung (300) nach einem der Ansprüche 1 bis 5 abgedeckt ist.

7. Mast (200), der eine Vielzahl von Pfosten (202) umfasst, die miteinander durch Querträger, die als "periphere Querträger" (203) bezeichnet werden, verbunden sind, wobei der Mast **dadurch gekennzeichnet ist, dass** mindestens einer der Pfosten mit einer Abdeckung (300) nach einem der Ansprüche 1 bis 5 abgedeckt ist.

8. Mast nach Anspruch 7, der mindestens eine Trägerstruktur (205) umfasst, die von Querträgern, die als "innere Querträger" (206) bezeichnet werden, in einem zwischen den Pfosten (202) definierten Volumen getragen wird, wobei die Trägerstruktur rotierende Führungselemente umfasst, die mechanisch mit einer rotierenden Welle (213) einer Windkraftanlage (210) mit einer vertikalen Drehachse verbunden sind, wobei die Windkraftanlage eine Vielzahl von Rotorblättern (211) umfasst, die sich entlang einer Längsachse erstrecken und im Wesentlichen vertikal um die Welle herum befestigt sind, wobei mindestens ein Pfosten (202) über mindestens einen Teil seiner Länge, der sich in einer Linie mit den Rotorblättern der Windkraftanlage befindet, mit einer Abdeckung (300) bedeckt ist.

## Claims

1. A coating (300) in the form of a thin flexible layer for covering a cylindrical element (202, 203, 204, 205, 206) subjected to the flow of a fluid and extending on the one hand between two substantially parallel first flanks (301) to be arranged facing each other when said coating (300) covers the cylindrical element and on the other hand between two substantially parallel second flanks (302), to be arranged opposite to each other when said coating (300) covers the cylindrical element (20), the coating comprising, assembled on a single element, several rows of cells (303) parallel to each other, said cells (303) of one row being staggeredly arranged relative to the cells (303) of each adjacent row, said rows being configured to promote occurrence of a turbulent boundary layer at the interface between said coating (300) and the fluid, when the fluid has a velocity within a range of predetermined values, **characterized in that** said cells (303) are generally cylindrical shaped circular cross-section through cells, the rows of cells (303) further forming several series, each series being formed by several sequences of cells (303), said series being adjacent and comprising, relative to one another, cell densities (303) different from one another, i.e. comprising a different number of cells (303) on a same surface dimension.

2. The coating (300) according to claim 1, configured so that when it covers a cylindrical element (202, 203, 204, 205, 206), the series of reliefs are radially distributed.

3. The coating (300) according to claim 1, configured so that when it covers a cylindrical element (202, 203, 204, 205, 206), the series of reliefs are longitudinally distributed.

4. The coating (300) according to one of claims 1 to 3, wherein the first two flanks (301) respectively comprise complementary quick fasteners such as clamps for rigidly attaching the coating (300) to the cylindrical element (20).

5. The coating (300) according to one of claims 1 to 4, **characterized in that** it is obtained by a flat molding manufacturing method.

6. A cylindrical element (202, 203, 204, 205, 206) **characterized in that** it is covered with a coating (300) according to one of claims 1 to 5.

7. A pylon (200) comprising a plurality of posts (202) connected to each other through so-called "peripheral crosspieces" (203), said pylon being **characterized in that** at least one of the posts is covered with a coating (300) according to one of claims 1 to 5.

8. The pylon according to claim **7,** comprising at least one support structure (205) carried by so-called "internal crosspieces" (206) in a volume defined between the posts (202), said support structure comprising rotation guide members mechanically connected to a rotating shaft (213) of a wind turbine (210) with a vertical axis of rotation, said wind turbine comprising a plurality of blades (211) extending along a substantially vertical longitudinal axis attached about said shaft, at least one post (202) being covered with a coating (300) over at least one portion of its length located in line with the wind turbine blades.
